# EUROPEAN PATENT SPECIFICATION

(11) **EP 2 259 590 B1**
(45) Date of publication and mention of the grant of the patent: **06.03.2019**
(21) Application number: 09722391.1
(22) Date of filing: 12.03.2009
(51) Int. Cl.: H04N 7/173, H04N 21/258, H04N 21/262, H04N 21/45, H04N 21/462, H04L 29/08

(54) **DYNAMIC CONTENT DELIVERY METHOD AND SYSTEM**
VERFAHREN UND SYSTEM ZUR BEREITSTELLUNG VON DYNAMISCHEN INHALTEN
PROCÉDÉ ET SYSTÈME DE DISTRIBUTION DE CONTENU DYNAMIQUE

(30) Priority: 21.03.2008 CN 200810084415
(43) Date of publication of application: 08.12.2010
(73) Proprietor: Huawei Technologies Co., Ltd., Longgang District Shenzhen, Guangdong 518129 (CN)
(72) Inventor: FAN, Shunan, Longgang District 518129, Shenzjen (CN); WANG, Lei, Longgang District 518129, Shenzhen (CN); DONG, Ting, Longgang District 518129 (CN); YANG, Jian, Longgang District 518129 (CN); CHEN, Guoqiao, Longgang District 518129, Shenzhen (CN); ZHANG, Huiping, Longgang District 518129 (CN)
(74) Representative: Körber, Martin Hans
(86) International application number: PCT/CN2009/070765
(87) International publication number: WO 2009/115019

(56) References cited:
- EP-A1- 1 463 323
- EP-A2- 1 026 887
- EP-A2- 1 763 235
- WO-A1-00/11850
- WO-A1-2007/021107
- CN-A- 1 852 106
- CN-A- 1 859 270
- US-A- 6 128 668
- US-A1- 2004 255 321
- US-A1- 2006 020 445
- US-A1- 2006 037 060
- US-A1- 2007 256 103

## Description

### FIELD OF THE INVENTION

The present invention relates to the communications field, and in particular, to a Dynamic Content Delivery (DCD) method and DCD apparatuses.

### BACKGROUND OF THE INVENTION

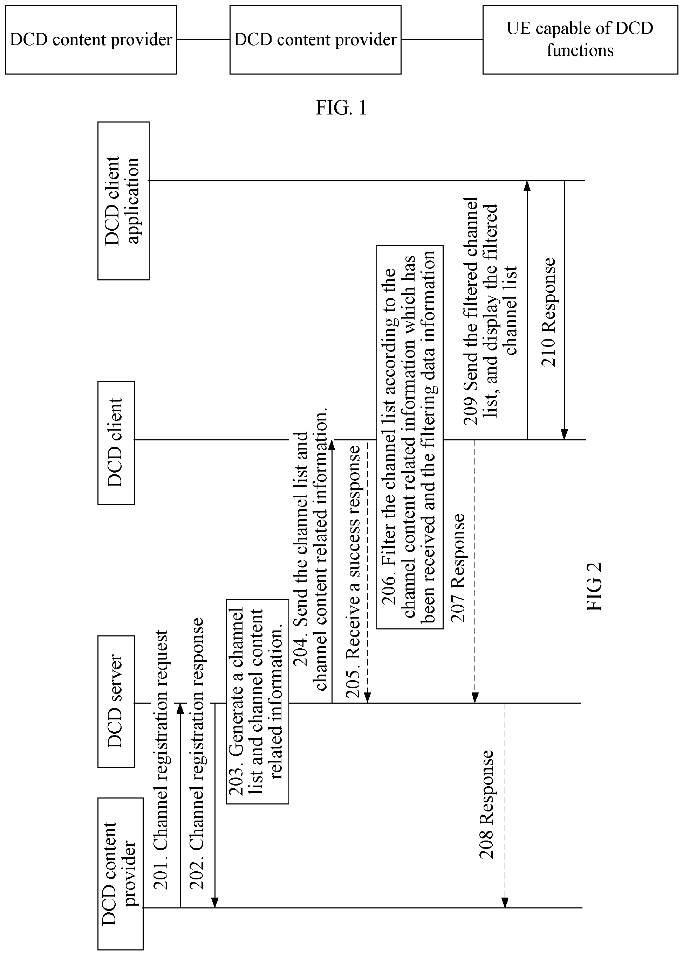

DCD is a content service which is customizable and individualized to the subscriber. The service types provided by DCD include: mobile phone newspaper, advertisement, and mobile phone television. As shown in FIG. 1, a DCD system includes: a DCD content provider, a DCD server, and a User Equipment (UE) capable of the DCD function.

In the DCD system, the DCD content provider provides the channel contents for the DCD server. The DCD server is responsible for managing the channel contents, and providing the channel contents for the UE. The step of providing channel contents by the DCD server for the UE is: The DCD server sends a channel list to a subscriber; the subscriber subscribes to the desired channel from the channel list; and the DCD server sends the channel contents selected by the subscriber to the UE.

The following problems have become apparent in the prior art: The software and hardware configuration of the UE is limited. When the configuration required by the channel contents subscribed to by the subscriber is higher than the configuration of the UE, the UE may be unable to receive or play the channel contents normally. For example, the storage space of the UE is 2M, when the channel contents subscribed to by the subscriber through clicking require a 10M storage space, the UE is unable to receive the channel contents.

A PCT patent application (WO 2007/021107 A1) discloses a method for providing personalized content to a user's terminal. In the method, there are two modes (push mode and pull mode) for the user's terminal to receive personalized content.

As to the pull mode, the terminal determined whether a preset condition is satisfied, if yes, the terminal sends a request carrying a ContentID parameter for notifying an intrinsic ID of the contents requested by the terminal to a DCD server.

And then, the DCD server selects the contents specified by the request among stored contents.

As to the push mode, the DCD server monitors whether the preset condition of the user is satisfied. To realize this, the server acquires personalization information of the terminal through an external personalization server. And when the preset condition is satisfied, for example, the geographical position variation of the terminal satisfied a preset condition, the DCD server personalizes acquired contents according to the personalization information, and then sends the personalization content to the terminal.

EP 1 763 235 A2 discloses a method for providing a unified programming guide including receiving data representative of a plurality of multimedia channels and associating channel numbers with at least a subset of the plurality of multimedia channels to generate a first channel numbering set. A set of executable instructions manipulate a processor to display an electronic programming guide (EPG) interface. The EPG interface includes a user input interface to receive user information indicating a preferred arrangement of a plurality of multimedia channels ordered in a channel numbering set.

Further, EP 1 026 887 A2 refers to a audiovisual information management system. In addition, US 2004/0255321A1 refers to a content blocking arrangement. Further, US2007/0256103A1 refers to an apparatus and method for constrained selection of favorite channels.

Further, US 2006/0037060A1 refers to a computing device sending a program guide request including a geographic identifier to another computing device. In response, the other computing device filters a master program guide as a function of the geographic identifier to create the requested program guide. The created program guide includes a call sign, physical channel, major channel, and content listing for each of the digital broadcast television channels.

### SUMMARY OF THE INVENTION

The present invention provides a method and apparatuses for distributing contents to control the dynamic contents available for subscription by the subscriber in light of the requirements of the UE.

The above mentioned problem is solved by the subject matter of independent claims 1 and 5. Further embodiments are described in the dependent claims.

Through the DCD method and the DCD apparatus disclosed herein, the dynamic contents can be delivered to the UE selectively according to the filtering information set for the dynamic contents at the time of providing dynamic contents for the UE. In this way, the problem in the prior art that dynamic contents are delivered to the UE unselectively and this leads to failure of receiving or playing the dynamic contents on the UE is solved, and thereby the dynamic contents delivered to the UE are controlled. Therefore, the dynamic contents delivered to the UE are more rationalized, and the experience of the subscriber using the DCD service is improved.

### BRIEF DESCRIPTION OF THE DRAWINGS

FIG. 1 shows a structure of a DCD system provided in the prior art;
FIG. 2 is a sequence diagram of a DCD method provided in the first embodiment of the present invention;
FIG. 3 shows a structure of a DCD server provided in the first embodiment of the present invention;
FIG. 4 shows a structure of a UE provided in the first embodiment of the present invention;
FIG. 5 is a sequence diagram of a DCD method provided in the second background example of the present invention;
FIG. 6 is a sequence diagram of a DCD method provided in the third embodiment of the present invention;
FIG. 7 is a sequence diagram of a DCD method provided in the fourth background example of the present invention;
FIG. 8 shows a structure of a DCD server provided in the fourth background example of the present
FIG. 9 shows a structure of a UE provided in the fourth background example of the present invention;
FIG. 10 is a sequence diagram of a DCD method provided in the fifth embodiment of the present invention;
FIG. 11 shows a structure of a DCD server provided in the fifth embodiment of the present invention; and
FIG. 12 shows a structure of a UE provided in the fifth embodiment of the present invention.

### DETAILED DESCRIPTION OF THE EMBODIMENTS

In order to solve the problem in the prior art that dynamic contents are delivered to the UE unselectively and this leads to failure of receiving or playing the dynamic contents subscribed to by the subscriber, the embodiments of the present invention provide a DCD method and DCD apparatuses. The present invention is elaborated below with reference to accompanying drawings and some exemplary embodiments.

A DCD method provided in an embodiment of the present invention includes:
filtering dynamic contents according to preset filtering information, where the filtering information includes dynamic content related information and/or filtering data information, and the filtering data information includes UE capability information and/or filtering policies.

When the filtering information is filtering policies, the operation of filtering dynamic contents according to the preset filtering information includes: comparing the dynamic contents with the preset filtering policies; and filtering the dynamic contents according to a comparison result.

When the filtering information is dynamic content related information and filtering policies, the operation of filtering dynamic contents according to the preset filtering information includes: comparing the dynamic content related information with the preset filtering policies; and filtering the dynamic contents according to a comparison result.

When the filtering information is dynamic content related information and UE capability information, the operation of filtering dynamic contents according to the preset filtering information includes: comparing the dynamic content related information with the UE capability information; and filtering the dynamic contents according to a comparison result.

A DCD server provided in an embodiment of the present invention includes:
a filtering information setting unit, configured to set filtering information for dynamic contents; and
a filtering unit, configured to filter the dynamic contents according to the filtering information.

A UE provided in an embodiment of the present invention includes:
a filtering data information setting unit, configured to set filtering data information for dynamic contents; and
a filtering unit, configured to filter the dynamic contents according to the filtering data information set by the filtering data information setting unit.

In the embodiments of the present invention, the dynamic contents include a channel list or channel contents; the dynamic content related information includes: information on the UE hardware required by the dynamic contents, or information on the UE software required by the dynamic contents, or User Agent Profile (UAProf) information, or subscriber preference information, or subscriber level information, or information on content/channel metadata, or any combination thereof; the UE capability information includes UE hardware information, or UE software information, or UE version information, or any combination thereof; and the filtering policies include UAProf information, or subscriber preference information, or subscriber level information, or information on content/channel metadata, or any combination thereof. The filtering information given above is for the exemplary purpose only, and should not be construed as limitation in practical application.

The steps of the DCD method described above may be implemented by different network entities in the DCD system. The following describes the embodiments of the present invention in more detail, supposing that the dynamic contents are a channel list.

In the following embodiments, the UE includes a DCD client and a DCD client application.

### Embodiment 1

The DCD server generates information related to the channel content, and the DCD client filters the channel list according to the preset filtering data information and information related to the channel content.

As shown in FIG 2, the DCD method provided in this embodiment includes the following steps:
Step 201: A DCD content provider sends a channel registration request to the DCD server.
Step 202: The DCD server returns a channel registration response to the DCD content provider, and notifies the DCD content provider of the configuration information and activation state of channel registration on the DCD server.
Step 203: The DCD server generates a channel list according to the received channel contents, and generates information related to contents of each channel in the channel list respectively.

Table 1 shows the format of the information related to the channel content:

**Table 1**

| **Information Element** | **Req** | **Type** | **Description** |
|---|---|---|---|
| TargetProfileElement | Mandatory | String | Record the information related to the channel content |

In Table 1, "TargetProfileElement" is a customized element name. This element name reveals whether the information is related to the channel content. In this embodiment, the "TargetProfileElement" is for the exemplary only. In practical application, it may be the name of another element capable of the same function.

Step 204: The DCD server sends a channel list and the information related to the channel content to the DCD client.

In this embodiment, the DCD server can add the information related to the channel content into the channel list, and send it to the DCD client; or send the information related to the channel content as a separate information list to the DCD client.

When the DCD server sends the information related to the channel content as a separate information list to the DCD client, the information list may be transmitted through an existing DCD message such as ChannelDiscovery Info message, ChannelDiscovery Notification message, or Channel Update message; or may be transmitted through a customized message; or may be transmitted through a Push message directly.

Step 205: The DCD client returns a receiving success response to the DCD server after receiving the channel list and the information related to the channel content.

Step 206: The DCD client filters the channel list according to received information related to the channel content and filtering data information preset on the UE, including: comparing, by the DCD client, the preset filtering data information with the information related to the channel content, and filtering the channel list according to a comparison result. For example, if the filtering data information preset in the DCD client indicates that the UE can receive channel contents of 2M or a smaller size, the DCD client compares the filtering data information with the received information related to the channel content, and deletes the channels whose size is greater than 2M in the channel list.

Step 207: The DCD client may return a response to the DCD server, and the response carries a list of displayable channels.

Step 208: The DCD server may return a response to the DCD content provider, and the response carries the list of channels displayable on the UE.

Step 209: The DCD client sends the filtered channel list to a DCD client application, and the DCD client application displays the filtered channel list to the user.

In this step, the displaying of the filtered channel list by the DCD client application to the user may include: displaying, by the DCD client application, only the list of channels receivable by the UE to the user, or the list of all channels to the user, where this list indicates the channels receivable by the UE. The displaying method described above is for the exemplary purpose only. In practice, other displaying modes may be applied.

Step 210: The DCD client application returns a response to the DCD client.

In order to implement the DCD method disclosed herein, a DCD apparatus is provided in this embodiment. The DCD apparatus includes a DCD server and a UE.

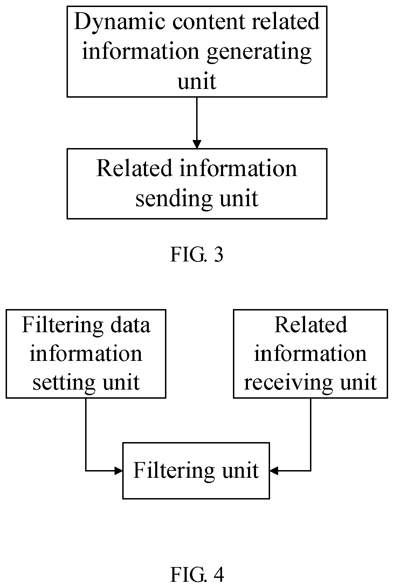

As shown in FIG. 3, a DCD server provided in this embodiment includes:
a dynamic content related information generating unit, configured to generate relevant information for the channel contents represented by the channel list; and
a related information sending unit, configured to send the information related to the channel content.

As shown in FIG. 4, a UE provided in this embodiment includes:
a related information receiving unit, configured to receive the information related to the channel content sent by the DCD server;
a filtering data information setting unit, configured to set filtering data information for the channel contents; and
a filtering unit, configured to filter the channel contents represented by the channel list according to the information related to the channel content and the filtering data information.

The filtering by the filtering unit includes: when the filtering data information is UE capability information, comparing, by the filtering unit, the information related to the channel content with the UE capability information, and filtering the channel list according to the comparison result; and when the filtering data information is preset filtering policies, comparing, by the filtering unit, the information related to the channel content with the filtering policies, and filtering the channel list according to the comparison result.

In this embodiment, the dynamic contents can be channel contents. When the dynamic contents are channel contents, step 203 shown in FIG. 2 may skip the operation of generating the relevant information for the channel contents; in step 204, the DCD server sends only the channel contents to the DCD client; and in step 206, the DCD client may filter the channel contents according to the channel contents and preset filtering policies.

Through the DCD method and the DCD apparatuses disclosed in this embodiment, the DCD server may deliver dynamic contents to the UE selectively according to preset filtering information when providing dynamic contents for the UE. In this way, the problem in the prior art that a channel list or channel contents are delivered to the UE unselectively and this leads to failure of receiving or playing the channel contents subscribed to by the subscriber on the UE is solved, and the channel list or channel contents delivered to the UE are controlled. Therefore, the channel list or channel contents delivered to the UE are more rationalized, and the experience of the subscriber using the DCD service is improved.

### Background example 2

The DCD server generates information related to the channel content, and a DCD client application filters the channel list according to the preset filtering data information and the information related to the channel content.

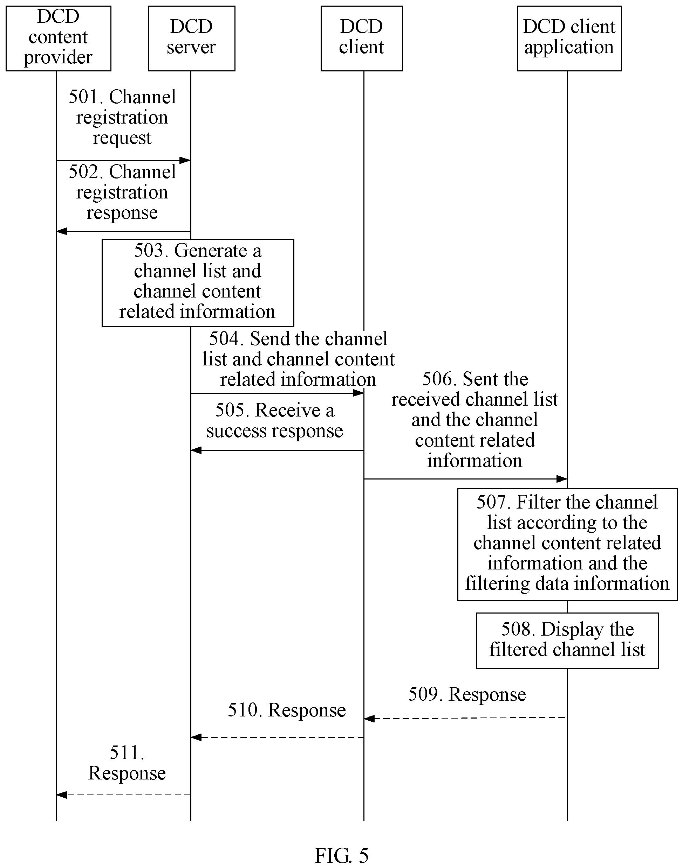

As shown in FIG. 5, in the DCD method provided in this background example steps 501-505 are the same as steps 201-205 in FIG. 2, and are not repeatedly described here any further. The difference between this embodiment and the DCD method shown in FIG. 2 is as follows:
Step 506: The DCD client sends the received channel list and the information related to the channel content to the DCD client application.
Step 507: The DCD application filters the channel list according to the information related to the channel content and the preset filtering data information, where step 507 specifically includes: comparing, by the DCD client application, the preset filtering data information with the information related to the channel content, and filtering the channel list according to a comparison result.
Step 508: The DCD client application displays the filtered channel list to the subscriber.

In this step, the displaying of the filtered channel list by the DCD client application to the user may include: displaying, by the DCD client application, only the list of channels receivable by the UE to the user, or the list of all channels to the user, where this list indicates the channels receivable by the UE. The displaying method described above is for the exemplary purpose only. In practice, other displaying modes may be applied.

Step 509: The DCD client application may return a response to the DCD client, and the response carries a list of displayable channels.

Step 510: The DCD client may return a response to the DCD server, and the response carries a list of displayable channels.

Step 511: The DCD server may return a response to the DCD content provider, and the response carries the list of displayable channels.

In order to implement the DCD method disclosed herein, a DCD apparatus is provided in this background example. The DCD apparatus includes a DCD server and a UE and is the same as that in the first embodiment, and therefore is not repeatedly described here any further.

In this background example, the dynamic contents may be channel contents. When the dynamic contents are channel contents, the DCD client application may filter the channel contents according to the received channel contents and the preset filtering data information. The detailed operation is basically same with the first embodiment, and therefore is not repeatedly described here any further.

Through the DCD method and the DCD apparatuses disclosed in this background example, the DCD client application can receive channel contents or channel list provided by the DCD server selectively according to the preset filtering information. In this way, the problem in the prior art that a channel list or channel contents are delivered to the UE unselectively and this leads to failure of receiving or playing the channel contents subscribed to by the subscriber on the UE is solved, and thereby the channel list or channel contents delivered to the UE are controlled. Therefore, the channel list or channel contents delivered to the UE are more rationalized, and the experience of the subscriber using the DCD service is improved.

### Embodiment 3

The DCD content provider generates information related to the channel content, and the DCD client filters the channel list according to the preset filtering data information and the information related to the channel content.

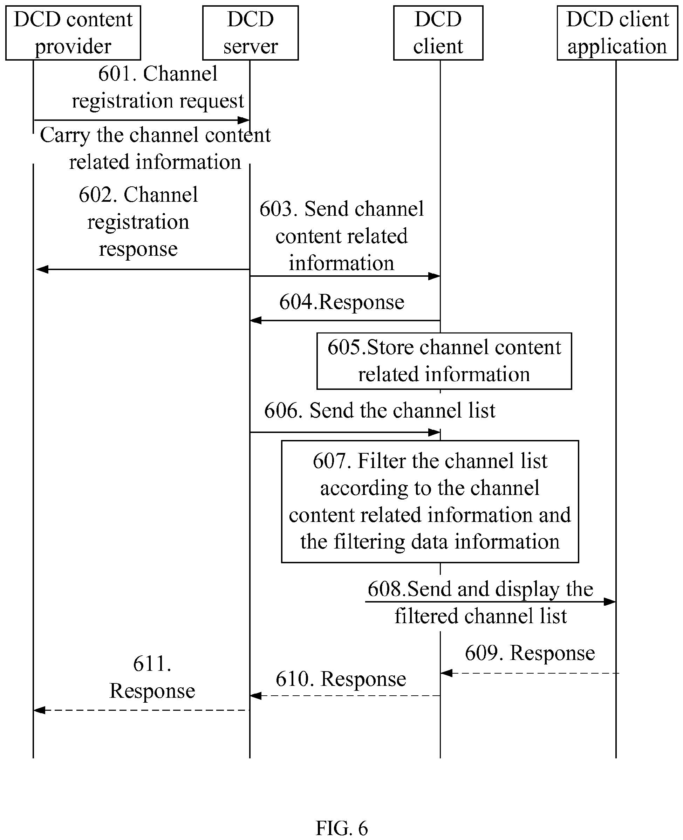

As shown in FIG. 6, the DCD method provided in this embodiment includes:
Step 601: The DCD content provider sends a channel registration request to the DCD server, and the channel registration request carries information related to the channel content. The information related to the channel content is provided by the DCD content provider for the DCD server. The format of the information related to the channel content is the same as that shown in Table 1, and is not repeatedly described here any further.
Step 602: The DCD server returns a channel registration response to the DCD content provider, and notifies the DCD content provider of the configuration information and activation state of channel registration on the DCD server.
Step 603: The DCD server sends the information related to the channel content received from the DCD content provider to the DCD client.

In this embodiment, the DCD server can send the information related to the channel content as a separate information list to the DCD client, the information list may be transmitted through an existing DCD message such as ChannelDiscovery Info message, ChannelDiscovery Notification message, or Channel Update message; or may be transmitted through a customized message; or may be transmitted through a Push message directly.

Step 604: The DCD client returns a receiving success response to the DCD server after receiving the information related to the channel content.

Step 605: The DCD client stores the information related to the channel content.

Step 606: When it is required to send the channel contents, the DCD server sends a channel list corresponding to the channel contents to the DCD clients.

Step 607: The DCD client searches for the information related to the channel content according to the received channel list and filters the channel list according to the preset filtering data information, where step 607 specifically includes: comparing, by the DCD client, the preset filtering data information with the found information related to the channel content, and filtering the channel list according to a comparison result.

Step 608: The DCD client sends the filtered channel list to a DCD client application, and the DCD client application displays the filtered channel list to the user.

In this step, the displaying of the filtered channel list by the DCD client application to the user may include: displaying, by the DCD client application, only the list of channels receivable by the UE to the user, or the list of all channels to the user, where this list indicates the channels receivable by the UE. The displaying method described above is for the exemplary purpose only. In practice, other displaying modes may be applied.

Step 609: The DCD client application may return a response to the DCD client, and the response carries a list of displayable channels.

Step 610: The DCD client may return a response to the DCD server, and the response carries a list of displayable channels.

Step 611: The DCD server may return a response to the DCD content provider, and the response carries the list of displayable channels.

In this embodiment, not only the DCD client can filter the channel list, but also the DCD client application can filter the channel list. When the DCD client application filters the received channel list, the principles are basically the same as those described in the second background example, and are not repeatedly described here any further.

In order to implement the DCD method disclosed herein, a DCD apparatus is provided in this embodiment. The DCD apparatus in this embodiment includes a UE, which is the same as the UE provided in the first embodiment, and is not repeatedly described here any further.

In this embodiment, the dynamic contents may be channel contents. When the dynamic contents are channel contents, the DCD content provider does not need to generate relevant information for the provided channel contents. The DCD client may filter the channel contents according to the received channel contents and the preset filtering data information.

Through the DCD method and the DCD apparatuses disclosed in this embodiment, the UE can filter the received channel list or channel contents according to the preset filtering information, and receive the channel contents selectively. In this way, the problem in the prior art that a channel list or channel contents are delivered to the UE unselectively and this leads to failure of receiving or playing the channel contents subscribed to by the subscriber on the UE is solved, and thereby the channel list or channel contents delivered to the UE are controlled. Therefore, the channel list or channel contents delivered to the UE are more rationalized, and the experience of the subscriber using the DCD service is improved.

### Background example 4

The DCD server generates information related to the channel content, and filters the channel list according to the preset filtering policies.

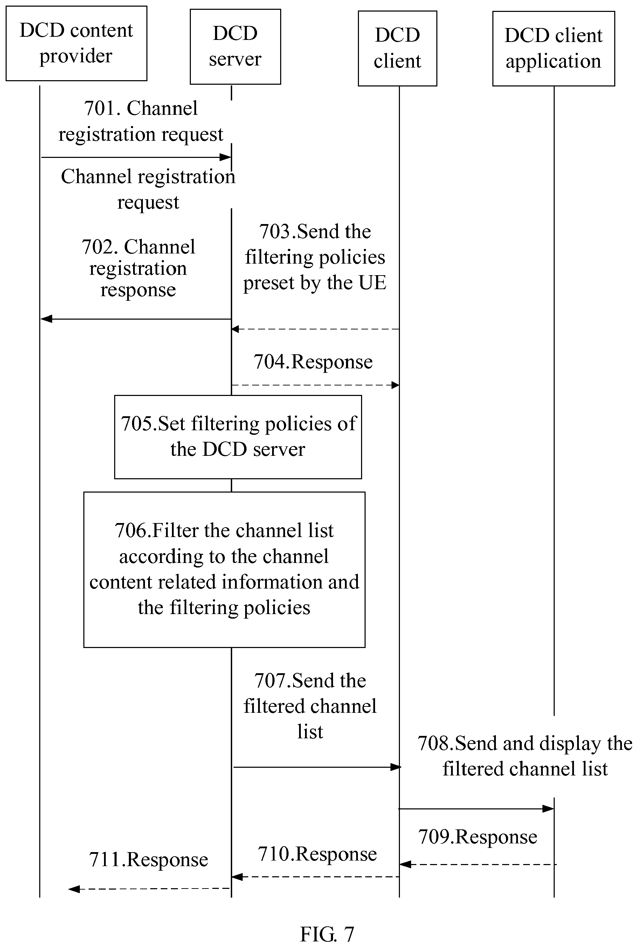

As shown in FIG. 7, the DCD method provided in this background example includes the following steps:
Step 701: The DCD content provider sends a channel registration request to the DCD server, and the channel registration request carries information related to the channel content. The information related to the channel content is provided by the DCD content provider for the DCD server. The format of the information related to the channel content is the same as that shown in FIG. 4 in the first embodiment, and is not repeatedly described here any further.
Step 702: The DCD server returns a channel registration response to the DCD content provider, and notifies the DCD content provider of the configuration information and activation state of channel registration on the DCD server.
Step 703: The DCD client may send the filtering policies preset by the UE to the DCD server.

In this embodiment, there may be one or more filtering policies. The filtering policies may be set according to different channels or according to different subscribers of the service provided by the UE. Table 2 shows the filtering policies set by the UE according to different channels:

**Table 2**

| **Channel** | **Age** | **Trust list** | **Message size** | **Message type** |
|---|---|---|---|---|
| Channel 1 | <18 | CCTV, yahoo | <2M | Text, picture, video, audio |
| Channel 2 | >18 | Sina | <20M | Text |
| Channel 3 | <18 | CCTV | <200K | Text, picture |

The filtering policies may include: age, gender, and job of the subscriber, and may include a message and/or content related information, for example, upper threshold of the size of the received message, storage space of the UE, level of the message content, content format, and application level ID of the message, security level of the message source, and the keyword filtering of the content in the message.

The DCD client sends the filtering policies to the DCD server through a message such as Contextual Information Upload message, or Channel Subscription Request message, or Content Update Request message, or through an extended FilterMessage. Filtering policies may be transmitted to the DCD server through a Hyper Text Transfer Protocol (HTTP) message directly. Table 3 shows an example of a message format for transmitting the filtering policies through an extended FilterMessage:

**Table 3**

| **Information Element** | **Req** | **Type** | **Description** |
|---|---|---|---|
| Message-Type | Mandatory | String | The message type indication is "Filter MessageRequest" |
| Message-ID | Mandatory | String | Identifying this message to facilitate filtering |
| Channel-IDs | Optional | String | Different filtering policies may be applied according to different channels |
| Content-IDs | Optional | String | Different filtering policies may be applied according to different contents |
| FilterElement | Mandatory | String | Specifying the filtering policies |

The message whose property is "FilterElement" is a customized message. In practical application, the message may be replaced with another message of DCD, and/or the message in Table 3 is reused. However, if another customized message is used instead, the property "FilterElement" needs to be reserved. In this background example, "FilterElement" is only an example. In practice, another property of the same filtering function may be used instead.

Step 704: After receiving the filtering policies, the DCD server stores the filtering policies set by the UE, and returns a receiving success response to the DCD client.

Step 705: The DCD server sets filtering policies for the channel contents. The filtering policies may be the same as or different from the received filtering policies of the UE.

Step 706: When channel contents need to be sent to the DCD client, the DCD server filters the channel list that represents the channel contents according to the UE filtering policies received in step 704, the filtering policies set by the DCD server in step 705, and the information related to the channel content obtained from the DCD content provider.

In this step, when the DCD server filters the channel list, a union set of all filtering policies of the UE and the filtering polices set by the DCD server may be obtained, and then the union set of the filtering policies is compared with the channel content information, and the channel list is filtered according to the comparison result. Alternatively, a union set of each filtering policy obtained from the UE and the filtering policies set by the DCD server is obtained respectively, and then the union set of the filtering policies is compared with the information related to the channel content, and the channel list is filtered according to the comparison result.

Step 707: The DCD server sends the filtered channel list to the DCD client.

Step 708: The DCD client sends the received channel list to a DCD client application, and the DCD client application displays the filtered channel list to the user.

In this step, the displaying of the filtered channel list by the DCD client application to the user may include: displaying, by the DCD client application, only the list of channels receivable by the UE to the user, or the list of all channels to the user, where this list indicates the channels receivable by the UE. The displaying method described above is for the exemplary purpose only. In practice, other displaying modes may be applied.

Step 709: The DCD client application may return a response to the DCD client, and the response carries a list of displayable channels.

Step 710: The DCD client may return a response to the DCD server, and the response carries a list of displayable channels.

Step 711: The DCD server may return a response to the DCD content provider, and the response carries the list of displayable channels.

In this background example, steps 703, 704, and 705 may occur before step 701, and the filtering policies set by the UE may be generated by the DCD client, or generated by the DCD client application.

In order to implement the DCD method disclosed herein, a DCD apparatus is provided in an embodiment of the present invention. The DCD apparatus includes a DCD server and a UE.

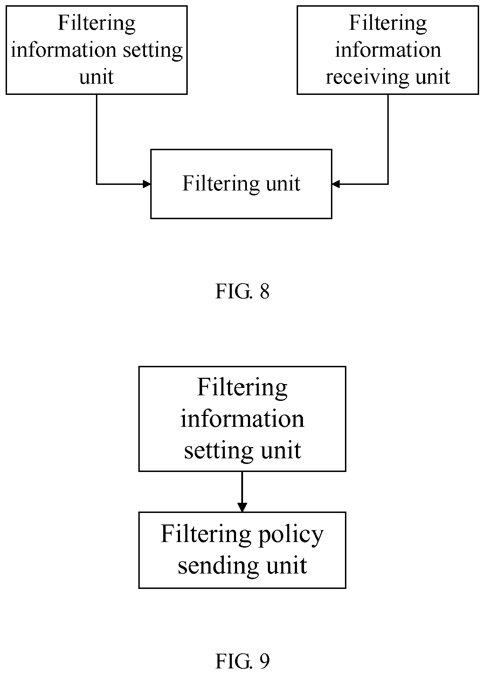

As shown in FIG. 8, a DCD server provided in a background example of the present invention includes:
a filtering information receiving unit, configured to receive filtering information, which, in this background example, includes information related to the channel content sent by the DCD server and the filtering policies set by the UE and sent by the DCD client;
a filtering information setting unit, configured to set the filtering policies of the DCD server, where the filtering policies may be the same as or different from the filtering policies set by the UE and received by the filtering information receiving unit; and
a filtering unit, configured to filter the channel list according to the information related to the channel content obtained from the DCD content provider and the filtering policies obtained by the filtering information receiving unit and the filtering information setting unit.

As shown in FIG. 9, a UE provided in this background example includes:
a filtering data information setting unit, configured to set filtering data information, which, in this background example, includes UE capability information and filtering policies; and
a filtering policy sending unit, configured to send the filtering policies set by the filtering information setting unit to the DCD server.

In this background example, the dynamic contents may be channel contents. When the dynamic contents are channel contents, the DCD server may filter the channel contents according to the received filtering policies of the UE, the filtering policies set by the DCD server, and the received channel contents.

Through the DCD method and the DCD apparatus provided in this background example, the DCD server can filter the channel contents or the channel list according to filtering information such as the filtering policies preset by the DCD server and the filtering policies preset by the UE. Therefore, the DCD server can provide DCD services for the UE selectively. The preset filtering policies ensure that the provided DCD services are more secure, overcome the problem in the prior art that the channel list or channel contents are delivered to the UE unselectively and this leads to failure of receiving or playing the channel contents subscribed to by the subscriber on the UE or leads to subscription to illegal information is solved, and thereby the channel list or channel contents delivered to the UE are controlled. The channel list or channel contents delivered to the UE are more rationalized, and the experience of the subscriber using the DCD service is improved.

### Embodiment 5

The DCD server generates information related to the channel content, and the DCD server and the DCD client filter the channel list according to the preset filtering policies.

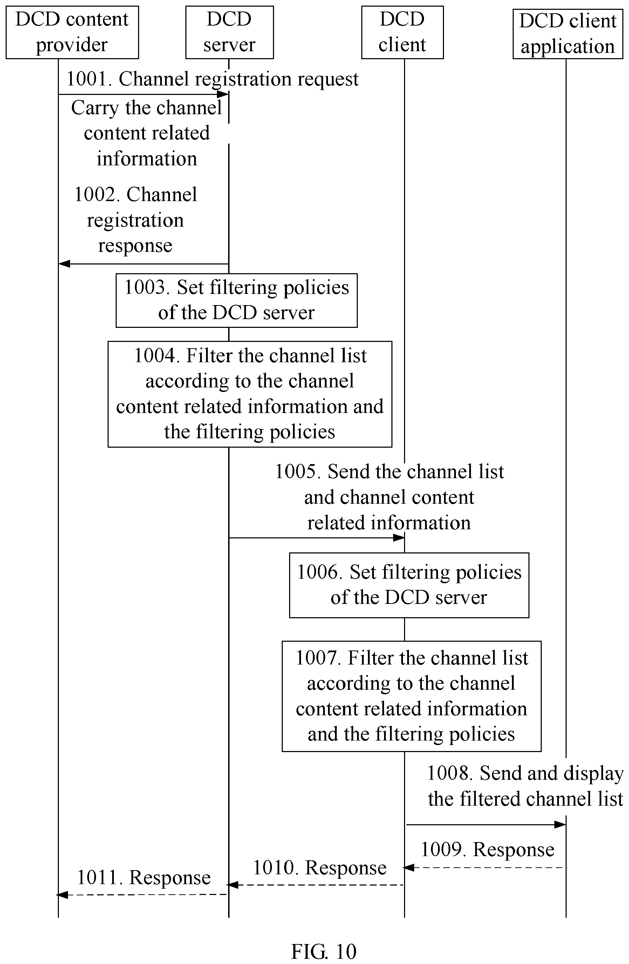

As shown in FIG. 10, the DCD method provided in this embodiment includes the following steps:
Step 1001: The DCD content provider sends a channel registration request to the DCD server, and the channel registration request carries information related to the channel content. The information related to the channel content is provided by the DCD content provider for the DCD server. The format of the information related to the channel content is the same as that shown in Table 1, and is not repeatedly described here any further.
Step 1002: The DCD server returns a channel registration response to the DCD content provider, and notifies the DCD content provider of the configuration information and activation state of channel registration on the DCD server.
Step 1003: The DCD server sets filtering policies for the channel contents.
Step 1004: When channel contents need to be sent to the DCD client, the DCD server filters the channel list that represents the channel contents according to the filtering policies set in step 1003 and the information related to the channel content obtained from the DCD content provider.
Step 1005: The DCD server sends the filtered channel list and the information related to the channel content to the DCD client.
Step 1006: The DCD client sets the filtering policy or policies. When the UE provides DCD services for multiple users simultaneously, different filtering policies may be set for different users or according to different channels.
Step 1007: The DCD client filters the channel list according to the filtering policies set in step 1006 and the received information related to the channel content. The detailed operation is described in step 706 in FIG. 7, and is not repeatedly described here any further.
Step 1008: The DCD client sends the filtered channel list to a DCD client application, and the DCD client application displays the filtered channel list to the user.

In this step, the displaying of the filtered channel list by the DCD client application to the user may include: displaying, by the DCD client application, only the list of channels receivable by the UE to the user, or the list of all channels to the user, where this list indicates the channels receivable by the UE. The displaying method described above is for the exemplary purpose only. In practice, other displaying modes may be applied.

Step 1009: The DCD client application may return a response to the DCD client, and the response carries a list of displayable channels.

Step 1010: The DCD client may return a response to the DCD server, and the response carries a list of displayable channels.

Step 1011: The DCD server may return a response to the DCD content provider, and the response carries the list of displayable channels.

In this embodiment, the DCD server or DCD client may set the filtering policies at any time, and the description above is for the exemplary purpose only.

In order to implement the DCD method disclosed herein, a DCD apparatus is provided in this embodiment. The DCD apparatus includes a DCD server and a UE.

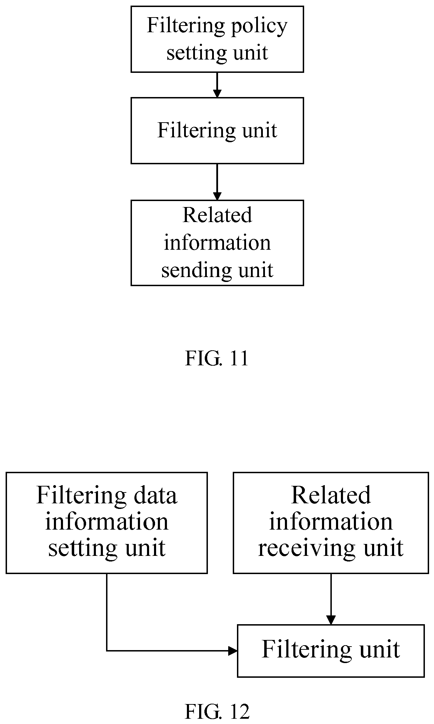

As shown in FIG. 11, a DCD server provided in this embodiment includes:
a filtering policy setting unit, configured to set filtering policies;
a filtering unit, configured to filter the channel list according to the information related to the channel content obtained from the DCD content provider and the filtering policies set by the filtering policy setting unit; and
a related information sending unit, configured to send the filtered channel list and the information related to the channel content to the DCD client.

As shown in FIG. 12, a UE provided in this embodiment includes:
a filtering data information setting unit, configured to set filtering data information;
a related information receiving unit, configured to receive the information related to the channel content sent by the DCD server; and
a filtering unit, configured to filter the received channel list according to the information related to the channel content received by the receiving unit and the filtering policies set by the filtering information setting unit.

In this embodiment, the dynamic contents may be channel contents. When the dynamic contents are channel contents, the DCD server and the DCD client may filter the channel contents according to the set filtering policies and the received channel contents.

Through the DCD method and the DCD apparatus provided in this embodiment, the DCD server and the UE can filter the channel contents or the channel list according to filtering information such as the preset filtering policies and the information related to the channel content. Therefore, the DCD server can provide DCD services for the UE selectively. The preset filtering policies ensure that the provided DCD services are more secure, overcome the problem in the prior art that the channel list or channel contents are delivered to the UE unselectively and this leads to failure of receiving or playing the channel contents subscribed to by the subscriber on the UE or leads to subscription to illegal information is solved, and thereby the channel list or channel contents delivered to the UE are controlled. The channel list or channel contents delivered to the UE are more rationalized, and the experience of the subscriber using the DCD service is improved.

The present invention is applicable to the DCD system for controlling the DCD services.

Person having ordinary skill in the art may understand that all or part of the steps of the method according to the embodiments of the present invention may be implemented by a program instructing relevant hardware. The program may be stored in a computer readable storage medium, such as a Read-Only Memory (ROM), a Random Access Memory (RAM), a magnetic disk or a Compact Disk Read-Only Memory (CD-ROM).

Detailed above are the technical solution, objectives and merits of the present invention. The above descriptions are merely some exemplary embodiments of the present invention, but not intended to limit the present invention.

## Claims

1. A method performed by a system comprising a Dynamic Content Delivery, DCD, content provider, a DCD server, and a user equipment comprising a DCD client and a DCD client application, wherein the method comprises:
• Sending, by the DCD content provider, a channel registration request to the DCD server, wherein the channel registration request carries information related to channel content (step 1001);
• Returning, by the DCD server, a channel registration response to the DCD content provider, and notifying the DCD content provider of configuration information and an activation state of channel registration on the DCD server (step 1002); Generating, by the DCD server, a channel list according to the received channel contents, and generating information related to contents of each channel in the channel list respectively.
• Setting, by the DCD server, preset first filtering policies for the channel content (step 1003);
• When the channel content needs to be sent to the DCD client, filtering, by the DCD server, the channel list according to the preset first filtering policies and the received information related to channel content, thereby arriving at a first filtered channel list (step 1004);
• Sending, by the DCD server, the first filtered channel list and the information related to the channel content to the DCD client (step 1005);
• Setting, by the DCD client, second filtering policies for the channel content (step 1006);
• Filtering, by the DCD client, the received first filtered channel list according to the set second filtering policies and the received information related to the channel content, thereby arriving at a second filtered channel list (step 1007);
• Sending, by the DCD client, the second filtered channel list to the DCD client application (step 1008);
• Displaying, by the DCD client application, the second filtered channel list to a user of the user equipment.

2. The DCD method according to claim 1, wherein:
a customized element name is set in the information related to the channel content, and serves as a basis for judging whether received information is the information related to the channel content.

3. The DCD method according to any one of claims 1-2, wherein:
the information related to the channel content comprises: information on UE hardware required by the channel list, or information on UE software required by the channel list, or User Agent Profile, UAProf, information, or subscriber preference information, or subscriber level information, or information on content/channel metadata, or any combination thereof.

4. The DCD method according to any one of claims 1-3, wherein:
the first and/or second filtering policies comprise User Agent Profile, UAProf, information, or subscriber preference information, or subscriber level information, or information on content/channel metadata, or any combination thereof.

5. A system comprising a Dynamic Content Delivery, DCD, content provider, a DCD server, and a user equipment comprising a DCD client and a DCD client application, wherein the system is configured to perform any of the methods according to claims 1-4.

## Patentansprüche

1. Verfahren, das von einem System durchgeführt wird, das einen Inhaltsanbieter zur Bereitstellung von dynamischen Inhalten (Dynamic Content Delivery, DCD), einen DCD-Server und ein Benutzergerät umfasst, das einen DCD-Client und eine DCD-Client-Anwendung umfasst, wobei das Verfahren umfasst:
- Senden, durch den DCD-Inhaltsanbieter, einer Kanalregistrierungsanforderung an den DCD-Server, wobei die Kanalregistrierungsanforderung eine Information bezüglich des Kanalinhalts trägt (Schritt 1001);
- Zurückgeben, durch den DCD-Server, einer Kanalregistrierungsantwort an den DCD-Inhaltsanbieter und Benachrichtigen des DCD-Inhaltsanbieters über eine Konfigurationsinformation und einen Aktivierungszustand der Kanalregistrierung auf dem DCD-Server (Schritt 1002);
- Erzeugen, durch den DCD-Server, einer Kanalliste gemäß den empfangenen Kanalinhalten und Erzeugen einer jeweiligen Information bezüglich des Inhalts jedes Kanals in der Kanalliste.
- Festlegen, durch den DCD-Server, von voreingestellten ersten Filterrichtlinien für den Kanalinhalt (Schritt 1003);
- wenn der Kanalinhalt an den DCD-Client gesendet werden muss, Filtern, durch den DCD-Server, der Kanalliste gemäß den voreingestellten ersten Filterrichtlinien und der empfangenen Information bezüglich des Kanalinhalts, um dadurch zu einer ersten gefilterten Kanalliste zu gelangen (Schritt 1004);
- Senden, durch den DCD-Server, der ersten gefilterten Kanalliste und der Information bezüglich des Kanalinhalts an den DCD-Client (Schritt 1005);
- Festlegen, durch den DCD-Client, von zweiten Filterrichtlinien für den Kanalinhalt (Schritt 1006);
- Filtern, durch den DCD-Client, der empfangenen ersten gefilterten Kanalliste gemäß der festgelegten zweiten Filterrichtlinien und der empfangenen Information bezüglich des Kanalinhalts, um dadurch zu einer zweiten gefilterten Kanalliste zu gelangen (Schritt 1007);
- Senden, durch den DCD-Client, der zweiten gefilterten Kanalliste an die DCD-Client-Anwendung (Schritt 1008);
- Anzeigen, durch die DCD-Client-Anwendung, der zweiten gefilterten Kanalliste für einen Benutzer des Benutzergeräts.

2. DCD-Verfahren nach Anspruch 1, wobei:
ein benutzerdefinierter Elementname in der Information bezüglich des Kanalinhalts festgelegt wird und als eine Basis zum Beurteilen dient, ob die empfangene Information die Information bezüglich des Kanalinhalts ist.

3. DCD-Verfahren nach einem der Ansprüche 1 bis 2, wobei:
die Information bezüglich des Kanalinhalts umfasst: eine Information über UE-Hardware, die von der Kanalliste benötigt wird, oder eine Information über UE-Software, die von der Kanalliste benötigt wird, oder eine Benutzeragentenprofil(User Agent Profile, UAProf)-Information oder eine Teilnehmerpräferenzinformation oder eine Teilnehmerebene-Information oder eine Information über Inhalts-/Kanalmetadaten oder Kombination davon.

4. DCD-Verfahren nach einem der Ansprüche 1 bis 3, wobei: die ersten und/oder zweiten Filterrichtlinien die Benutzeragentenprofil (UAProf)-Information oder eine Teilnehmerpräferenzinformation oder eine Teilnehmerebene-Information oder eine Information über Inhalts-/Kanalmetadaten oder Kombination davon umfassen.

5. System, umfassend einen Inhaltsanbieter zur Bereitstellung von dynamischen Inhalten (DCD), einen DCD-Server und ein Benutzergerät, das einen DCD-Client und eine DCD-Client-Anwendung umfasst, wobei das System konfiguriert ist, um eines der Verfahren nach den Ansprüchen 1 bis 4 durchzuführen.

## Revendications

1. Procédé réalisé par un système comprenant un fournisseur de contenu à distribution dynamique de contenu (DCD), un serveur DCD, et un équipement d'utilisateur comprenant un client DCD et une application cliente DCD, le procédé consistant à :
envoyer, par le fournisseur de contenu DCD, une demande d'enregistrement de canal au serveur DCD, la demande d'enregistrement de canal transportant une information relative à un contenu de canal (étape 1001) ;
renvoyer, par le serveur DCD, une réponse d'enregistrement de canal au fournisseur de contenu DCD, et notifier au fournisseur de contenu DCD une information de configuration et un état d'activation de l'enregistrement de canal sur le serveur DCD (étape 1002) ;
générer, par le serveur DCD, une liste de canaux selon le contenu de canal reçu, et générer respectivement une information relative à un contenu de chaque canal dans la liste de canaux ;
définir, par le serveur DCD, des premières stratégies de filtrage prédéfinies pour le contenu de canal (étape 1003) ;
quand le contenu de canal doit être envoyé au client DCD, filtrer, par le serveur DCD, la liste de canaux selon les premières stratégies de filtrage prédéfinies et l'information reçue relative au contenu de canal, de manière à obtenir une première liste filtrée de canaux (étape 1004) ;
envoyer, par le serveur DCD, la première liste filtrée de canaux et l'information relative au contenu de canal au client DCD (étape 1005) ;
définir, par le client DCD, des secondes stratégies de filtrage pour le contenu de canal (étape 1006) ;
filtrer, par le client DCD, la première liste filtrée de canaux selon les secondes stratégies de filtrage définies et l'information reçue relative au contenu de canal, de manière à obtenir une seconde liste filtrée de canaux (étape 1007) ;
envoyer, par le client DCD, la seconde liste filtrée de canaux à l'application cliente DCD (étape 1008) ;
afficher, par l'application cliente DCD, la seconde liste filtrée de canaux à un utilisateur de l'équipement d'utilisateur.

2. Procédé DCD selon la revendication 1, dans lequel :
un nom d'élément personnalisé est défini dans l'information relative au contenu de canal, et sert de base pour juger si une information reçue est l'information relative au contenu de canal.

3. Procédé DCD selon l'une quelconque des revendications 1 et 2, dans lequel :
l'information relative au contenu de canal comprend : une information sur un UE matériel requis par la liste de canaux, ou une information sur un UE logiciel requis par la liste de canaux, ou une information de profil d'agent d'utilisateur (UAProf), ou une information de préférence d'abonné, ou une information de niveau d'abonné, ou une information sur des métadonnées de contenu/canal, ou une combinaison quelconque correspondante.

4. Procédé DCD selon l'une quelconque des revendications 1 à 3, dans lequel :
les premières et/ou secondes stratégies de filtrage comprennent une information de profil d'agent d'utilisateur (UAProf), ou une information de préférence d'abonné, ou une information de niveau d'abonné, ou une information sur des métadonnées de contenu/canal, ou une combinaison quelconque correspondante.

5. Système comprenant un fournisseur de contenu à distribution dynamique de contenu (DCD), un serveur DCD, et un équipement d'utilisateur comprenant un client DCD et une application cliente DCD, le système étant configuré pour réaliser l'un quelconque des procédés selon les revendications 1 à 4.
